(19) **Europäisches Patentamt**
**European Patent Office**
**Office européen des brevets**

(11) **EP 1 876 833 B1**

(12) **EUROPEAN PATENT SPECIFICATION**

(45) Date of publication and mention of the grant of the patent:
**08.09.2010 Bulletin 2010/36**

(51) Int Cl.:
*H04N 7/46* (2006.01)

(21) Application number: **07019718.1**

(22) Date of filing: **10.01.2003**

(54) **Method for block prediction of a bi-predictive picture in direct mode**

Verfahren zur Blockprädiktion eines biprädiktiven Bildes im Direktmodus

Procédé de prédiction d'un bloc d'une image bi-prédictive dans un mode direct

(84) Designated Contracting States:
**FI FR IT SE**

(30) Priority: **09.04.2002 KR 20020019262**
**21.11.2002 KR 20020072862**

(43) Date of publication of application:
**09.01.2008 Bulletin 2008/02**

(62) Document number(s) of the earlier application(s) in accordance with Art. 76 EPC:
**03000442.8 / 1 359 769**

(73) Proprietor: **LG Electronics, Inc.**
**Seoul 150-721 (KR)**

(72) Inventor: **Jeon, Byeong Moon**
**Seoul (KR)**

(74) Representative: **Menges, Christian Alexander et al**
**Diehl & Partner GbR**
**Augustenstr. 46**
**80333 München (DE)**

(56) References cited:
**EP-A- 0 863 674     WO-A-01/33864**

- **"WORKING DRAFT NUMBER 2, REVISION 2 (WD-2)" DOCUMENT JVT-B118R2, 29 January 2002 (2002-01-29), pages 1-10, XP001086630**
- **TSUHAN CHEN ET AL: "A new frame interpolation scheme for talking head sequences" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. 3, 23 October 1995 (1995-10-23), pages 591-594, XP010197038 ISBN: 0-7803-3122-2**

**Description**

BACKGROUND OF THE INVENTION

1. Field of the Invention

The present invention relates to a moving picture coding system, and particularly, to a block prediction method using improved direct mode for a B picture.

2. Description of the Background Art

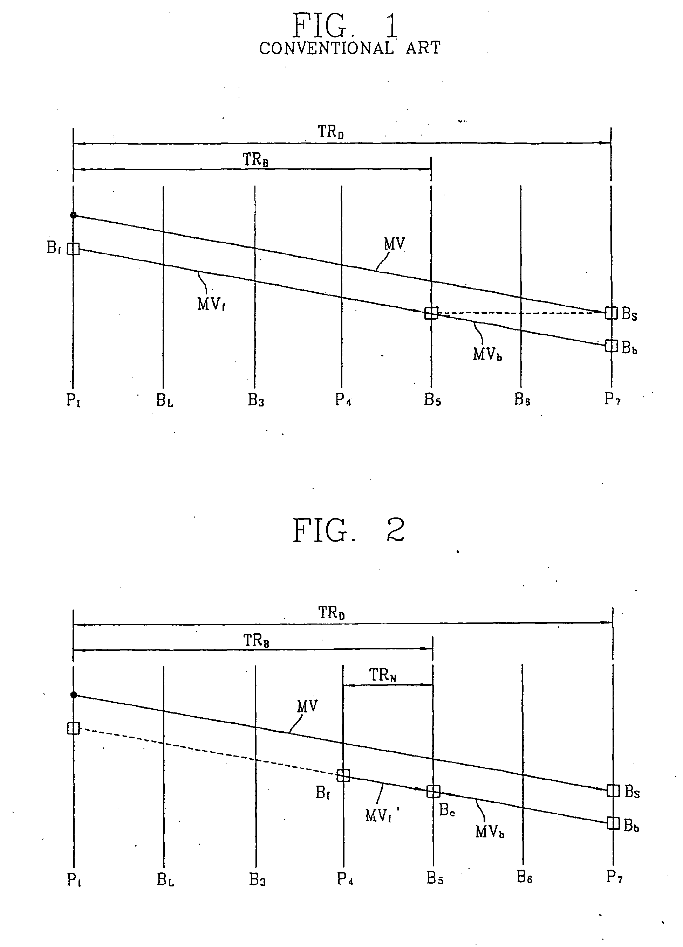

In a moving picture coding system, one of advantages for using B picture is that a direct prediction mode which does not add overhead information is selected more than any other prediction modes (a forward prediction, a backward prediction, a bidirectional prediction and intra prediction, etc.). Therefore, the moving picture coding system is able to have higher coding efficiency when using the B picture than the coding efficiency when using only P picture.
In the B picture, the block prediction method using the direct mode is to calculate forward motion vector and backward motion vector as scaled versions of a motion vector of a co-located block in a backward reference picture for direct mode, to obtain two distinct motion-compensated blocks using above motion vectors, and to obtain predicted block by averaging two motion-compensated blocks finally.
The block prediction method using the direct mode as above will be described in more detail with reference to Figure 1.
Figure 1 is a view showing a picture pattern for describing the block prediction method using the direct mode according to the conventional art. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.
Also, parameters shown in Figure 1 will be described first for the convenience' sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), MV represents a motion vector of a co-located block in the backward reference picture for direct mode (P7), $MV_f$ represents a forward motion vector of direct mode pointing to the forward reference picture for direct mode, and $MV_b$ represents a backward motion vector of direct mode pointing to the backward reference picture for direct mode. Herein, the forward reference picture for direct mode is a reference picture pointed by the motion vector of the co-located block in the backward reference picture for direct mode.
The block prediction method for direct mode will be described using above parameters as follows.
First, the forward motion vector of direct mode ($MV_f$) is obtained from a motion vector (MV) of a co-located block $B_s$ in the backward reference picture for direct mode (P7) by applying following equation (1).

$$MV_f = \frac{TR_B \times MV}{TR_D} \text{ --------------------------------------------------} \quad (1)$$

In addition, the backward motion vector of direct mode ($MV_b$) is obtained from a motion vector (MV) of the co-located block $B_s$ in the backward reference picture for direct mode (P7) by applying following equation (2).

$$MV_b = (TR_B - TR_D) \times \frac{MV}{TR_D} \text{ ---------------------------------} \quad (2)$$

Therefore, blocks $B_f$ and $B_b$ are motion-compensated using the motion vectors $MV_f$ and $MV_b$ calculated from equations (1) and (2), and after that, the two blocks are averaged to get a prediction value $B_c$' of a current block $B_c$ in the B picture as following equation (3).

$$B_c' = \frac{B_f + B_b}{2} \quad \text{---------------------------------------------------} \quad (3)$$

However, according to the block prediction method for the direct mode of the conventional art, the forward motion vector of direct mode is obtained from the motion vector of the co-located block in the backward reference picture for direct mode, and therefore, the obtained value is just an approximated value, not a precise motion vector of the current block of the B picture.

Also, according to the block prediction method for direct mode of the conventional art, even though the reference picture temporally close to the B picture has higher similarity with the B picture, the block prediction is made using the average of two distinct motion-compensated blocks without considering temporal distance between the reference pictures. Therefore, the accuracy of predicted block is lowered.

Especially, in a sequence having a fading scene, since brightness of continuous B pictures can be gradually darkened or gradually lightened, the prediction value obtained by simply averaging two motion-compensated blocks has a lot of difference from the original value, and thereby the coding efficiency of the entire system is greatly lowered.

The "Working Draft Number 2, Revision 2 (WD-2)" of the Joint Video Team (JVT) of ISO/IEC MPEG and ITU-T VCEG discloses obtaining a forward reference frame of a current frame by using a forward motion vector, and obtaining a backward reference frame of a current frame by using a backward motion vector. The forward motion vector and the backward motion vector are calculated by the formulas

$$MV_F = TR_B \cdot MV/TR_D$$

$$MV_B = (TR_B - TR_D) \quad MV/TR_D$$

where $TR_B$ is the temporal distance between the current B frame and the reference frame pointed by the forward motion vector MV of the collocated macroblock MB, and is $TR_D$ is the temporal distance between the future reference frame and the reference frame pointed by the forward motion vector MV of the collocated MB.

EP 0 863 674 A2 discloses a system for coding of digital video images such as bi-directionally predicted video object planes, in particular, where the B-VOP and/or a reference image used to code the B-VOP is interlaced coded. For a B-VOP macroblock which is co-sited with a field predicted macroblock of a future anchor picture, direct mode prediction is made by calcutating four field motion vectors, then generating the prediction macroblock. The four field motion vectors and their reference fields are determined from

    (1) an offset termof the current macroblock's coding vector,
    (2) the two future anchor picture field motion vectors,
    (3) the reference field used by the two field motion vectors of the co-sited future anchor macroblock, and
    (4) the temporal spacing in field periods, between the current B-VOP fields and the anchor fields.

Additionally, a coding mode decision process for the current MB selects a forward, backward, or average field coding mode according to a minimum sum of absolute differences error which is obtained over the top and bottom fields of the current MB.

SUMMARY OF THE INVENTION

Therefore, an object of the present invention is to provide a block prediction method using direct mode which has improved coding efficiency by obtaining a forward motion vector of direct mode from a motion vector of a co-located block in a backward reference picture for direct mode, and by obtaining predicted block of a B picture which is about to be coded presently by applying an interpolative prediction to two distinct motion-compensated blocks.

Also, another object of the present invention is to provide a block prediction method using direct mode which is able to improve accuracy of predicted block and improve a coding efficiency, by obtaining a forward motion vector of direct mode from a reference picture closest to a current B picture, and by obtaining predicted block of a B picture which is coded presently by applying an interpolative prediction to two distinct motion-compensated blocks.

To achieve the objects of the present invention, as embodied and broadly described herein, there is provided a block prediction method for improved direct mode comprising the steps of: a first step for calculating forward and backward motion vectors of direct mode for a current block in B picture; a second step for obtaining motion-compensated blocks using the forward and backward motion vectors obtained in the first step; and a third step for predicting a block of the B picture which will be coded (or decoded) presently by applying an interpolative prediction for the motion-compensated blocks obtained in the second step, in a method of predicting block of the B picture which will be coded (or decoded) presently.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a view showing a picture pattern for describing a block prediction method for direct mode according to the conventional art;
Figure 2 is a view showing a picture pattern for describing a block prediction method for direct mode according to the present invention;
Figure 3 is a view showing a picture pattern for describing an interpolative prediction method according to an embodiment of the present invention; and
Figure 4 is a view showing a picture pattern for describing an interpolative prediction method according to another embodiment of the present invention.

DETAILED DESCRIPTION OF THE PREFERRED EMBODIMENTS

Reference will now be made in detail to the preferred embodiments of the present invention, examples of which are illustrated in the accompanying drawings.

In a block prediction method for direct mode according to the present invention, a forward motion vector and a backward motion vector of direct mode are calculated from a motion vector of a co-located block in a backward reference picture for direct mode, two motion-compensated blocks are obtained using above motion vectors, and finally, a predicted block is obtained by interpolating two motion-compensated blocks.

Also, in the block prediction method using direct mode according to the present invention, the backward motion vector is calculated from the backward reference picture for direct mode, a forward motion vector of direct mode is calculated from the reference picture closest to the current B picture among the forward reference pictures , and motion-compensated blocks are obtained from above motion vectors, and finally, a predicted block is obtained by interpolating two motion-compensated blocks.

Hereinafter, an embodiment of the present invention will be described with reference to accompanying Figures as follows.

Figure 2 shows a picture pattern for describing the block prediction method for direct mode according to the present invention. As shown therein, the picture pattern comprises an I-picture (not shown) coded using prediction only from decoded samples within the same picture, P pictures P1, P4, and P7 coded by inter prediction using at most one motion vector from previously-decoded reference pictures, and B-pictures B2, B3, B5 and B6 coded by two inter prediction blocks from previously-decoded reference pictures.

Parameters shown in Figure 2 will be described first for the convenience sake. $TR_D$ represents a temporal distance between a forward reference picture for direct mode (P1) and a backward reference picture for direct mode (P7), $TR_B$ represents a temporal distance between the forward reference picture for direct mode (P1) and a current B picture (B5), $TR_N$ represents a temporal distance between the reference picture (P4) closest to the current B picture and the current B picture (B5), MV represents a motion vector of a co-located block in the backward reference picture for direct mode (P7), $MV_f$' represents a forward motion vector of direct mode pointing to the reference picture (P4) closest to the current B picture, and $MV_B$ represents a backward motion vector of direct mode pointing to the backward reference picture for direct mode (P7).

At that time, the motion vector (MV) of the co-located block $B_s$ in the backward reference picture for direct mode (P7) is obtained in the process of coding (or decoding) the backward reference picture for direct mode before the current B picture is coded (or decoded).

The block prediction method for direct mode as constructed above according to the present invention will be described as follows.

The forward motion vector (MV$_f$'), which points to the reference picture (P4) having the closest temporal distance among the forward reference pictures, is obtained from following equation (4).

$$MV_f' = \frac{TR_N \times MV}{TR_D} \quad \text{------------------------------------------} \quad (4)$$

In addition, the backward motion vector (MV$_b$), which points to the backward reference picture for direct mode (P7), is obtained from the conventional art using following equation (2).

$$MV_b = (TR_B - TR_D) \times \frac{MV}{TR_D} \quad \text{------------------------------} \quad (2)$$

Accordingly, motion-compensated blocks B$_f$ and B$_b$ are obtained using the motion vectors MV$_f$' and MV$_b$ calculated by the equations (2) and (4).

On the other hand, the predicted value B$_c$' for the block B$_c$ is obtained from the above two motion-compensated blocks B$_f$ and B$_b$. At that time, the B picture may be located closer to one between the reference picture in which the motion-compensated block B$_f$ exists and the backward reference picture for direct mode in which the motion-compensated block B$_b$ exists.

The block prediction method using direct mode according to the present invention can be applied to Figures 1 and 2, and therefore, the reference picture in which the motion-compensated block B$_f$ exists is the forward reference picture for direct mode (for example, P1 picture in Figure 1) or the reference picture closest to the B picture (for example, P4 picture in Figure 2).

Moreover, in a sequence having a fading scene, the brightness of continuous B pictures can be gradually darkened or gradually lightened, and therefore, the predicted value obtained by simply averaging the two motion-compensated blocks B$_f$ and B$_b$ as in the conventional art has a large difference from the actually original value. Therefore, the coding efficiency is lowered significantly.

Therefore, the block prediction method using direct mode according to the present invention performs the interpolative prediction considering the temporal distance between the current B picture and the reference picture in which the motion-compensated block B$_f$ exists (that is, the forward reference picture for direct mode or the reference picture closest to the B picture), and considering the temporal distance between the current B picture and the backward reference picture for direct mode, in order to improve the accuracy of the block predicted by the direct mode.

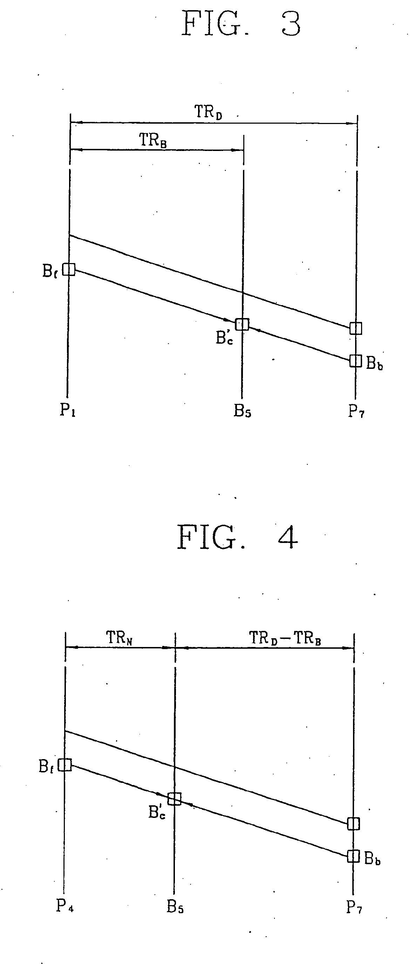

As shown in Figure 3, if the forward motion vector of direct mode is obtained using the conventional art, the motion-compensated block B$_f$ exists in the forward reference picture for direct mode (P1) and the motion-compensated block B$_b$ exists in the backward reference picture for direct mode (P7), the interpolative prediction as following equation (5) is performed. Herein, TR$_D$ is the temporal distance between the forward reference picture for direct mode (P1) and the backward reference picture for direct mode (P7), and TR$_B$ is the temporal distance between the forward reference picture for direct mode (P1) and the current B picture (B5). Especially, the interpolative prediction method includes the same averaging calculation as the conventional art for a case that the B picture is located on a center between the forward reference picture for direct mode and the backward reference picture for direct mode.

$$B_c' = B_f \times \frac{(TR_D - TR_B)}{TR_D} + B_b \times \frac{TR_B}{TR_D} \quad \text{-------------------------} \quad (5)$$

Also, as shown in Figure 4, in case that the forward motion vector of direct mode is obtained according to the present invention, the motion-compensated block B$_f$ exists in the reference picture (P4) closest to the current B picture, and the motion-compensated block B$_b$ exists in the backward reference picture for direct mode (P7). Therefore, the interpolative prediction as following equation (6) is performed. Herein, TR$_D$ is the temporal distance between the forward reference picture for direct mode (P1) and the backward reference picture for direct mode (P7), and TR$_B$ is the temporal distance between the forward reference picture for direct mode (P1) and the current B picture, and TR$_N$ is the temporal distance between the reference picture (P4) closest to the current B picture and the current B picture.

$$B_C{}' = B_f \times \frac{(TR_D - TR_B)}{(TR_N + TR_D - TR_B)} + B_b \times \frac{TR_N}{(TR_N + TR_D - TR_B)} \quad \text{-------------} \quad (6)$$

On the other hand, the respective pictures can be represented using a picture order counter, that is, display order information.

Therefore, the equations (5) and (6) can be represented as following equation (7) using the picture order count values, which are the display order information of respective pictures. Herein, $T_c$ is a picture order count value, that is, the display order information allocated to the current B picture, $T_f$ is a picture order count value, that is, the display order information allocated to the forward reference picture for direct mode or a picture order count value, that is, the display order information allocated to the reference picture closest to the B picture in case that the forward motion vector is calculated by the equation (4), and $T_b$ is a picture order count value, that is, the display order information allocated to the backward reference picture for direct mode.

$$B_C{}' = B_f \times \frac{(T_b - T_c)}{(T_b - T_f)} + B_b \times \frac{(T_c - T_f)}{(T_b - T_f)} \quad \text{---------------------------} \quad (7)$$

As described above, according to the present invention, the forward motion vector of direct mode is obtained from the motion vector of the co-located block in the backward reference picture for direct mode, and a predicted block of the B picture, which is about to be coded, is obtained by applying interpolative prediction to the motion-compensated block values. Therefore, the coding efficiency is improved when comparing to that of the conventional art.

Also, according to the present invention, the forward motion vector of direct mode is obtained from the reference picture closest to the B picture which is about to be coded (or decoded) presently and having higher similarity with the B picture, and the predicted block of the B picture is obtained by applying the interpolative prediction to the blocks which are motion-compensated from above forward motion vector and backward motion vector of direct mode. Therefore, the accuracy of the predicted block can be improved and the coding efficiency can be improved.

As the present invention may be embodied in several forms without departing from the spirit or essential characteristics thereof, it should also be understood that the above-described embodiments are not limited by any of the details of the foregoing description, unless otherwise specified, but rather should be construed broadly within the scope as defined in the appended claims, and therefore all changes and modifications that fall within the scope of the claims, are therefore intended to be embraced by the appended claims.

**Claims**

1. A method of predicting a current block ($B_c{}'$) of a bi-predictive picture ($B_5$) in direct mode, comprising:

   obtaining a forward motion-compensated block ($B_f$) pertaining to a forward reference picture ($P_1$; $P_4$) by using a forward motion vector ($MV_f$), and obtaining a backward motion-compensated block ($B_b$) pertaining to a backward reference picture ($P_7$) by using a backward motion vector ($MV_b$); and
   predicting the current block ($B_c{}'$) of the bi-predictive picture ($B_5$) using a weighted sum of the forward motion-compensated block ($B_f$) and the backward motion-compensated block ($B_b$),
   wherein a first coefficient for weighting the forward motion-compensated block of the weighted sum and a second coefficient for weighting the backward motion-compensated block of the weighted sum are derived using a picture order count ($T_b$) of the backward reference picture ($P_7$), a picture order count ($T_c$) of the bi-predictive picture ($B_5$) and a picture order count ($T_f$) of the forward reference picture ($P_1$; $P_4$), and
   wherein the forward motion vector ($MV_f$) and the backward motion vector ($MV_b$) are calculated from a motion vector ($MV$) of a co-located block ($B_s$) in the backward reference picture ($P_7$), wherein the forward motion vector ($MV_f$) and the backward motion vector ($MV_b$) are obtained by scaling the motion vector ($MV$) of the co-located block ($B_s$) in the backward reference picture ($P_7$).

2. The method of claim 1, wherein the first and second coefficients are derived using a difference between the picture order count ($T_b$) of the backward reference picture ($P_7$) and the picture order count ($T_f$) of the forward reference picture ($P_1$; $P_4$).

3. The method of claim 2, wherein the second coefficient is dependent on a difference between the picture order count ($T_c$) of the bi-predictive picture ($B_5$) and the picture order count ($T_f$) of the forward reference picture ($P_1$; $P_4$).

4. The method of claim 3, wherein the second coefficient becomes larger as the difference between the picture order count ($T_c$) of the bi-predictive picture ($B_5$) and the picture order count ($T_f$) of the forward reference picture ($P_1$; $P_4$) becomes larger.

5. The method of claim 2, 3 or 4, wherein the first coefficient becomes smaller as the second coefficient becomes larger.

6. The method of one of the claims 3 to 5, wherein the first coefficient is dependent on a difference between the picture order count ($T_b$) of the backward reference picture ($P_7$) and the picture order count ($T_c$) of the bi-predictive picture ($B_5$).

7. The method of claim 6, wherein the first coefficient becomes larger as the difference between the picture order count ($T_b$) of the backward reference picture ($P_7$) and the picture order count ($T_c$) of the bi-predictive picture ($B_5$) becomes larger.

8. The method of one of the preceding claims, wherein each picture order count ($T_b$, $T_c$, $T_f$) represents picture display order information.

9. The method of one of the preceding claims, wherein the scaling of the motion vector (MV) is based on first and second temporal distances.

10. The method of claim 9, wherein the first temporal distance is a temporal distance between the forward reference picture and the bi-predictive picture, and the second temporal distance is a temporal distance between the forward reference picture and the backward reference picture.

**Patentansprüche**

1. Verfahren zum Vorausberechnen eines aktuellen Blocks ($B_c$') eines bi-prädiktiven Bildes ($B_5$) im Direktmodus, das Folgendes umfasst:

   Erhalten eines vorwärtsbewegungskompensierten Blocks ($B_f$) betreffend ein Vorwärtsreferenzbild ($P_1$; $P_4$) durch Einsatz eines Vorwärtsbewegungsvektors ($MV_f$), und Erhalten eines rückwärtsbewegungskompensierten Blocks ($B_b$) betreffend ein Rückwärtsreferenzbild ($P_7$) durch Einsatz eines Rückwärtsbewegungsvektors ($MV_b$) ; und
   Vorausberechnen des aktuellen Blocks ($B_c$') des bi-prädiktiven Bildes ($B_5$) durch Einsatz einer gewichteten Summe des vorwärtsbewegungskompensierten Blocks ($B_f$) und des rückwärtsbewegungskompensierten Blocks ($B_b$),
   wobei ein erster Koeffizient zum Gewichten des vorwärtsbewegungskompensierten Blocks der gewichteten Summe und ein zweiter Koeffizient zum Gewichten des rückwärtsbewegungskompensierten Blocks der gewichteten Summe durch Einsatz eines Bildfolgezählers ($T_b$) des Rückwärtsreferenzbildes ($P_7$), eines Bildfolgezählers ($T_c$) des bi-prädiktiven Bildes ($B_5$) und eines Bildfolgezählers ($T_f$) des Vorwärtsreferenzbildes ($P_1$; $P_4$) abgeleitet sind, und
   wobei der Vorwärtsbewegungsvektor ($MV_f$) und der Rückwärtsbewegungsvektor ($MV_b$) anhand eines Bewegungsvektors (MV) eines co-lokalisierten Blocks ($B_s$) in dem Rückwärtsreferenzbild ($P_7$) berechnet werden, wobei der Vorwärtsbewegungsvektor ($MV_f$) und der Rückwärtsbewegungsvektor ($MV_b$) durch Skalieren des Bewegungsvektors (MV) des co-lokalisierten Blocks ($B_s$) in dem Rückwärtsreferenzbild ($P_7$) erhalten werden.

2. Verfahren gemäß Anspruch 1, wobei der erste und der zweite Koeffizient durch Einsatz einer Differenz zwischen dem Bildfolgezähler ($T_b$) des Rückwärtsreferenzbildes ($P_7$) und dem Bildfolgezähler ($T_f$) des Vorwärtsreferenzbildes ($P_1$; $P_4$) abgeleitet sind.

3. Verfahren gemäß Anspruch 2, wobei der zweite Koeffizient von einer Differenz zwischen dem Bildfolgezähler ($T_c$) des bi-prädiktiven Bildes ($B_s$) und dem Bildfolgezähler ($T_f$) des Vorwärtsreferenzbildes ($P_1$; $P_4$) abhängig ist.

**4.** Verfahren gemäß Anspruch 3, wobei der zweite Koeffizient größer wird, wenn die Differenz zwischen dem Bildfolgezähler ($T_c$) des bi-prädiktiven Bildes ($B_5$) und dem Bildfolgezähler ($T_f$) des Vorwärtsreferenzbildes ($P_1$; $P_4$) größer wird.

**5.** Verfahren gemäß Anspruch 2, 3 oder 4, wobei der erste Koeffizient kleiner wird, wenn der zweite Koeffizient größer wird.

**6.** Verfahren gemäß einem der Ansprüche 3 bis 5, wobei der erste Koeffizient von einer Differenz zwischen dem Bildfolgezähler ($T_b$) des Rückwärtsreferenzbildes ($P_7$) und dem Bildfolgezähler ($T_c$) des bi-prädiktiven Bildes ($B_5$) abhängig ist.

**7.** Verfahren gemäß Anspruch 6, wobei der erste Koeffizient größer wird, wenn die Differenz zwischen dem Bildfolgezähler ($T_b$) des Rückwärtsreferenzbildes ($P_7$) und dem Bildfolgezähler ($T_c$) des bi-prädiktiven Bildes ($B_5$) größer wird.

**8.** Verfahren gemäß einem der vorangehenden Ansprüche, wobei jeder Bildfolgezähler ($T_b$, $T_c$, $T_f$) Bildanzeigereihenfolge-Informationen darstellt.

**9.** Verfahren gemäß einem der vorangehenden Ansprüche, wobei das Skalieren des Bewegungsvektors (MV) auf ersten und zweiten zeitlichen Distanzen basiert.

**10.** Verfahren gemäß Anspruch 9, wobei die erste zeitliche Distanz eine zeitliche Distanz zwischen dem Vorwärtsreferenzbild und dem bi-prädiktiven Bild ist, und die zweite zeitliche Distanz eine zeitliche Distanz zwischen dem Vorwärtsreferenzbild und dem Rückwärtsreferenzbild ist.

**Revendications**

**1.** Procédé de prédiction d'un bloc courant ($B_c$') d'une image bi-prédictive ($B_5$) en mode direct, comprenant :

l'obtention d'un bloc à mouvement compensé vers l'avant ($B_f$) concernant une image de référence avant ($P_1$; $P_4$) en utilisant un vecteur mouvement vers l'avant ($MV_f$) et l'obtention d'un bloc à mouvement compensé vers l'arrière ($B_b$) concernant une image de référence arrière ($P_7$) en utilisant un vecteur mouvement vers l'arrière ($MV_b$) ; et
la prédiction du bloc courant ($B_c$') de l'image bi-prédictive ($B_5$) en utilisant une somme pondérée du bloc à mouvement compensé vers l'avant ($B_f$) et du bloc à mouvement compensé vers l'arrière ($B_b$),
un premier coefficient pour pondérer le bloc à mouvement compensé vers l'avant de la somme pondérée et un second coefficient pour pondérer le bloc à mouvement compensé vers l'arrière de la somme pondérée étant obtenus en utilisant un comptage ordonné d'image ($T_b$) de l'image de référence arrière ($P_7$), un comptage ordonné d'image ($T_c$) de l'image bi-prédictive ($B_5$) et un comptage ordonné d'image ($T_f$) de l'image de référence avant ($P_1$;$P_4$), et
le vecteur mouvement vers l'avant ($MV_f$) et le vecteur mouvement vers l'arrière ($MV_b$) étant calculés à partir d'un vecteur mouvement (MV) d'un bloc co-localisé ($B_s$) dans l'image de référence arrière ($P_7$), le vecteur mouvement vers l'avant ($MV_f$) et le vecteur mouvement vers l'arrière ($MV_b$) étant obtenus en mettant à l'échelle le vecteur mouvement (MV) du bloc co-positionné ($B_s$) dans l'image de référence arrière ($P_7$).

**2.** Procédé selon la revendication 1, dans lequel le premier et le second coefficients sont obtenus en utilisant une différence entre le comptage ordonné d'image ($T_b$) de l'image de référence arrière ($P_7$) et le comptage ordonné d'image ($T_f$) de l'image de référence avant ($P_1$;$P_4$).

**3.** Procédé selon la revendication 2, dans lequel le second coefficient dépend d'une différence entre le comptage ordonné d'image ($T_c$) de l'image bi-prédictive ($B_5$) et le comptage ordonné d'image ($T_f$) de l'image de référence avant ($P_1$;$P_4$).

**4.** Procédé selon la revendication 3, dans lequel le second coefficient augmente au fur et à mesure qu'augmente la différence entre le comptage ordonné d'image ($T_c$) de l'image bi-prédictive ($B_5$) et le comptage ordonné d'image ($T_f$) de l'image de référence avant ($P_1$;$P_4$).

**5.** Procédé selon la revendication 2, 3 ou 4, dans lequel le premier coefficient s'abaisse au fur et à mesure que le second coefficient augmente.

6. Procédé selon l'une des revendications 3 à 5, dans lequel le premier coefficient dépend d'une différence entre le comptage ordonné d'image $(T_b)$ de l'image de référence arrière $(P_7)$ et le comptage ordonné d'image $(T_c)$ de l'image bi-prédictive $(B_5)$.

7. Procédé selon la revendication 6, dans lequel le premier coefficient augmente au fur et à mesure qu'augmente la différence entre le comptage ordonné d'image $(T_b)$ de l'image de référence arrière $(P_7)$ et le comptage ordonné d'image $(T_c)$ de l'image bi-prédictive $(B_5)$.

8. Procédé selon l'une des revendications précédentes, dans lequel chaque comptage ordonné d'image $(T_b, T_c, T_f)$ représente une information ordonnée d'affichage d'image.

9. Procédé selon l'une des revendications précédentes, dans lequel la mise à l'échelle du vecteur mouvement (MV) est basée sur des première et seconde distances temporelles.

10. Procédé selon la revendication 9, dans lequel la première distance temporelle est une distance temporelle entre l'image de référence avant et l'image bi-prédictive, et la seconde distance temporelle est une distance temporelle entre l'image de référence avant et l'image de référence arrière.

# FIG. 1
## CONVENTIONAL ART

# FIG. 2

# FIG. 3

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0863674 A2